# EUROPÄISCHE PATENTSCHRIFT

(11) **EP 4 315 480 B1**
(45) Veröffentlichungstag und Bekanntmachung des Hinweises auf die Patenterteilung: **22.01.2025**
(21) Anmeldenummer: 22711191.1
(22) Anmeldetag: 01.03.2022
(51) Int. Cl.: H01M 10/613, H01M 10/625, H01M 10/6552, H01M 50/204, H01M 50/242, H01M 50/249, H01M 50/264

(54) **KÜHLEINRICHTUNG FÜR EINEN ELEKTRISCHEN ENERGIESPEICHER MIT GRAVITATIONSWÄRMEROHREN, ELEKTRISCHER ENERGIESPEICHER SOWIE KRAFTFAHRZEUG**
COOLING DEVICE FOR AN ELECTRICAL ENERGY STORE HAVING GRAVITY-ASSISTED HEAT PIPES, ELECTRICAL ENERGY STORE, AND MOTOR VEHICLE
DISPOSITIF DE REFROIDISSEMENT POUR ACCUMULATEUR D'ÉNERGIE ÉLECTRIQUE COMPORTANT DES CALODUCS ASSISTÉS PAR GRAVITÉ, ACCUMULATEUR D'ÉNERGIE ÉLECTRIQUE ET VÉHICULE AUTOMOBILE

(30) Priorität: 29.03.2021 DE 102021107822
(43) Veröffentlichungstag der Anmeldung: 07.02.2024
(73) Patentinhaber: Bayerische Motoren Werke Aktiengesellschaft, 80809 München (DE)
(72) Erfinder: FRANKE, Torsten, 81477 München (DE)
(86) Internationale Anmeldenummer: PCT/EP2022/055036
(87) Internationale Veröffentlichungsnummer: WO 2022/207208

(56) Entgegenhaltungen:
- DE-A1- 102015 106 948
- DE-A1- 102017 218 248

## Beschreibung

Die Erfindung betrifft eine Kühleinrichtung für einen elektrischen Energiespeicher zum Kühlen von Energiespeicherzellen des elektrischen Energiespeichers, wobei die Kühleinrichtung Gravitationswärmerohre mit einem Arbeitsmedium zum Aufnehmen von Abwärme der Energiespeicherzellen aufweist. Die Erfindung betrifft außerdem einen elektrischen Energiespeicher sowie ein Kraftfahrzeug.

Vorliegend richtet sich das Interesse auf elektrische Energiespeicher, welche beispielsweise als Traktionsbatterien für elektrifizierte Kraftfahrzeuge, also Elektro- oder Hybridfahrzeuge, eingesetzt werden können. Solche elektrischen Energiespeicher weisen üblicherweise zumindest einen Zellverbund aus mehreren Energiespeicherzellen auf. Zum Kühlen der Energiespeicherzellen im Betrieb des elektrischen Energiespeichers werden Kühleinrichtungen eingesetzt. Solche Kühleinrichtungen können beispielsweise, wie in der WO 2020/207 718 A1 offenbart, Gravitationswärmerohre aufweisen. Aus der DE 10 2015 106 948 A1 und der DE 10 2017 218 248 A1 sind Kühleinrichtungen mit Wärmerohren bekannt.

Es ist Aufgabe der vorliegenden Erfindung, eine Lösung bereitzustellen, wie Gravitationswärmerohre auf einfache Weise in einen elektrischen Energiespeicher integriert werden können.

Diese Aufgabe wird erfindungsgemäß durch eine Kühleinrichtung, einen elektrischen Energiespeicher sowie ein Kraftfahrzeug mit den Merkmalen gemäß den jeweiligen unabhängigen Patentansprüchen gelöst. Vorteilhafte Ausführungen der Erfindung sind Gegenstand der abhängigen Patentansprüche, der Beschreibung sowie der Figuren.

Eine erfindungsgemäße Kühleinrichtung für einen elektrischen Energiespeicher dient zum Kühlen von Energiespeicherzellen des elektrischen Energiespeichers. Die Kühleinrichtung weist Gravitationswärmerohre mit einem Arbeitsmedium zum Aufnehmen von Abwärme der Energiespeicherzellen auf. Darüber hinaus weist die Kühleinrichtung einen Rahmen mit Wandungen zum Ausbilden von Aufnahmen für die Energiespeicherzellen auf, wobei die Gravitationswärmerohre in die Wandungen integriert sind.

Zur Erfindung gehört außerdem ein elektrischer Energiespeicher mit zumindest einem Zellverbund aus Energiespeicherzellen und einer erfindungsgemäßen Kühleinrichtung, wobei die Energiespeicherzellen in den Aufnahmen des Rahmens angeordnet sind, und mit einem Speichergehäuse, in welchem der Zellverbund angeordnet ist. Der elektrische Energiespeicher kann beispielsweise ein Hochvoltenergiespeicher sein, welcher als wiederaufladbare Traktionsbatterie bzw. als Traktionsakkumulator für ein elektrisch antreibbares Kraftfahrzeug verwendet wird. Der elektrische Energiespeicher weist den zumindest einen Zellverbund auf, welcher mehrere Energiespeicherzellen umfasst. Die Energiespeicherzellen können beispielsweise als prismatische Energiespeicherzellen oder Pouchzellen ausgebildet sein. Vorzugsweise sind die Energiespeicherzellen als Rundzellen ausgebildet. Die Energiespeicherzellen weisen Zellterminals bzw. Zellpole auf, welche im Bereich eines Zellgehäusedeckels eines Zellgehäuses der Energiespeicherzellen angeordnet sein können. Das Zellgehäuse weist außerdem Zellgehäuseseitenwände und einen Zellgehäuseboden auf.

Das Speichergehäuse kann Gehäuseteile in Form von einem Gehäusedeckel bzw. einem Gehäuseoberteil und einem Gehäuseboden bzw. einem Gehäuseunterteil aufweisen, welche unter Ausbildung eines Gehäuseinnenraums zusammengefügt sind. In dem Gehäuseinnenraum ist der zumindest eine Zellverbund angeordnet. Zum Kühlen der Energiespeicherzellen weist der zumindest eine Zellverbund außerdem die Kühleinrichtung auf. Die Kühleinrichtung weist die Gravitationswärmerohre auf. Gravitationswärmerohre bzw. Zwei-Phasen-Thermosiphons sind Wärmeübertrager, welche die Abwärme über Verdampfungswärme transportieren. Dazu weisen die Gravitationswärmerohre eine längliche Hülse auf, welche sich in einer Hochrichtung entlang der Gravitationsrichtung erstreckt. In der Hülse ist ein Arbeitsmedium angeordnet, welches in einem flüssigen Zustand vorliegt, solange die von der Abwärme verursachte Temperatur der Energiespeicherzellen einen Siedepunkt des flüssigen Arbeitsmediums unterschreitet. Sobald die Temperatur den Siedepunkt überschreitet, verdampft das Arbeitsmedium. Anders ausgedrückt geht das Arbeitsmedium von dem flüssigen in den gasförmigen Zustand über. Das Arbeitsmedium steigt als Dampf entgegen der Gravitationsrichtung nach oben, kondensiert dort an einer mit dem Gravitationswärmerohr gekoppelten Wärmesenke der Kühleinrichtung und gibt somit die transportierte Abwärme an die Wärmesenke ab. Das Arbeitsmedium geht also wieder von dem gasförmigen Zustand in den flüssigen Zustand über und fällt als Flüssigkeitstropfen durch die Gravitationskraft wieder nach unten. Der Rücktransport des kondensierten Arbeitsmediums erfolgt also durch die Gravitationskraft. Die Wärmesenke ist insbesondere durch ein Gehäuseteil des Speichergehäuses in Form von dem Gehäuseoberteil ausgebildet.

Diese Gravitationswärmerohre sind in den Rahmen integriert, welcher zum Halten der Energiespeicherzellen ausgebildet ist. Der Rahmen weist dazu Wandungen auf, welche die Aufnahmen für die Energiespeicherzellen ausbilden. Bei Energiespeicherzellen in Form von Rundzellen können diese Aufnahmen beispielsweise als Hohlräume mit einem runden oder wabenförmigen Querschnitt ausgebildet sein. Die Energiespeicherzellen sind in diese Aufnahmen eingeschoben, sodass sich die Wandungen in Hochrichtung entlang der Zellgehäuseseitenwände erstrecken. In diese Wandungen sind die Gravitationswärmerohre integriert. Die Gravitationswärmerohre sind somit benachbart zu den Energiespeicherzellen angeordnet und erstrecken sich zwischen den Energiespeicherzellen entlang der Zellgehäuseseitenwände. Der Rahmen ist dabei aus einem gut wärmeleitfähigen Material, beispielsweise Aluminium oder Magnesium, ausgebildet. Beispielsweise kann der Rahmen mittels Druckguss hergestellt sein. Zum elektrischen Isolieren der Energiespeicherzellen von dem Rahmen kann ein Isolationselement, beispielsweise in Form von einem Kunststoffschrumpfschlauch, zwischen den Zellgehäusen der Energiespeicherzellen und den Wandungen des Rahmens angeordnet sein. Die Energiespeicherzellen können somit die Abwärme über die gut wärmeleitfähigen Wandungen an die Gravitationswärmerohre abgeben, von wo aus sie zu der Wärmesenke transportiert wird.

Durch das Integrieren der Gravitationswärmerohre in den Rahmen können die Gravitationswärmerohre besonders einfach und platzsparend in den elektrischen Energiespeicher integriert werden.

Vorzugsweise ist der Rahmen zusätzlich zum Aufnehmen von unfallbedingten Kräften ausgebildet. Der Rahmen schützt die Energiespeicherzellen somit vor einer Krafteinwirkung. Der Rahmen kann außerdem Crashstrukturen aufweisen. Die Crashstrukturen können an einem der Fahrzeugfront zugewandten Bereich, an einem dem Fahrzeugheck zugewandten Bereich oder an seitlichen, sich entlang einer Fahrzeuglängsachse erstreckenden Bereichen des Rahmens angeordnet sein. Die Crashstrukturen können beispielsweise als Schubfelder und/oder Wabenstrukturen ausgebildet sein.

Die Wandungen weisen rohrförmige Hohlräume auf, welche zum Ausbilden der Gravitationswärmerohre mit dem Arbeitsmedium gefüllt sind. Die Gravitationswärmerohre sind also durch den Rahmen selbst ausgebildet, indem die Hohlräume als längliche Kanäle in die Wandungen eingebracht sind und mit dem Arbeitsmedium gefüllt sind. Die Hohlräume können einseitig, beispielsweise an einer Oberseite des Rahmens, offen sein. Die Oberseite des Rahmens kann abdichtend an dem Gehäuseoberteil befestigt sein, sodass die Gravitationswärmerohre thermisch an das Gehäuseoberteil angebunden sind.

In einer vorteilhaften Weiterbildung des elektrischen Energiespeichers weist dieser einen Träger und ein Zellkontaktiersystem zum Verschalten der Energiespeicherzellen auf, wobei das Zellkontaktiersystem und der Rahmen in den Träger integriert sind. Das Zellkontaktiersystem ist insbesondere als ein Stanzkamm mit einem Leiterbahnbild. Welches eine vorbestimmte Verschaltung der Energiespeicherzellen ermöglicht, ausgebildet. Dieser Stanzkamm wird gefertigt, indem in einem ersten Schritt ein Leitermaterial, beispielsweise ein Blech, strukturiert wird und Aussparungen aus dem Leitermaterial herausgetrennt werden. In einem zweiten Schritt werden das strukturierte Leitermaterial und der Rahmen mit dem Träger verbunden. Das Verbinden des Leitermaterials und des Rahmens mit dem Träger kann beispielsweise durch Fügen mittels Urformen durchgeführt werden. Dazu werden das strukturierte Leitermaterial und der Rahmen mit einem Isolationsmaterial umspritzt und/oder vergossen. Beim Umspritzen oder Vergießen können bestimmte Bereiche des Leitermaterials freigelassen werden, um in einem dritten Schritt den Stanzkamm fertigzustellen. Dazu können weitere Aussparungen zum Herstellen eines vorbestimmten Leiterbahnbildes aus dem Leitermaterial herausgetrennt werden.

Zur Erfindung gehört außerdem ein Kraftfahrzeug mit zumindest einem erfindungsgemäßen elektrischen Energiespeicher. Das Kraftfahrzeug ist insbesondere ein elektrifiziertes Kraftfahrzeug und weist den elektrischen Energiespeicher als Traktionsbatterie auf. Insbesondere ist der Rahmen des elektrischen Energiespeichers unter Ausbildung einer Tragstruktur mit einer Karosserie des Kraftfahrzeugs verbunden.

Die mit Bezug auf die erfindungsgemäße Kühleinrichtung vorgestellten Ausführungsformen und deren Vorteile gelten entsprechend für den erfindungsgemäßen elektrischen Energiespeicher sowie für das erfindungsgemäße Kraftfahrzeug.

Weitere Merkmale der Erfindung ergeben sich aus den Ansprüchen, der Figuren und der Figurenbeschreibung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar.

Die Erfindung wird nun anhand eines bevorzugten Ausführungsbeispiels sowie unter Bezugnahme auf die Zeichnungen näher erläutert. Es zeigen:
- Fig. 1: eine schematische Darstellung eines elektrischen Energiespeichers;
- Fig. 2: eine schematische Schnittdarstellung einer ersten Ausführungsform eines elektrischen Energiespeichers in einer ersten Ebene;
- Fig. 3: eine schematische Schnittdarstellung der ersten Ausführungsform eines elektrischen Energiespeichers in der zweiten Ebene;
- Fig. 4: eine schematische Schnittdarstellung einer zweiten Ausführungsform eines elektrischen Energiespeichers in der ersten Ebene;
- Fig.5: eine schematische Schnittdarstellung der zweiten Ausführungsform eines elektrischen Energiespeichers in der zweiten Ebene; und
- Fig. 6: eine schematische Schnittdarstellung einer Ausführungsform eines elektrischen Energiespeichers in einer dritten Ebene.

In den Figuren sind gleiche oder funktionsgleiche Elemente mit den gleichen Bezugszeichen versehen.

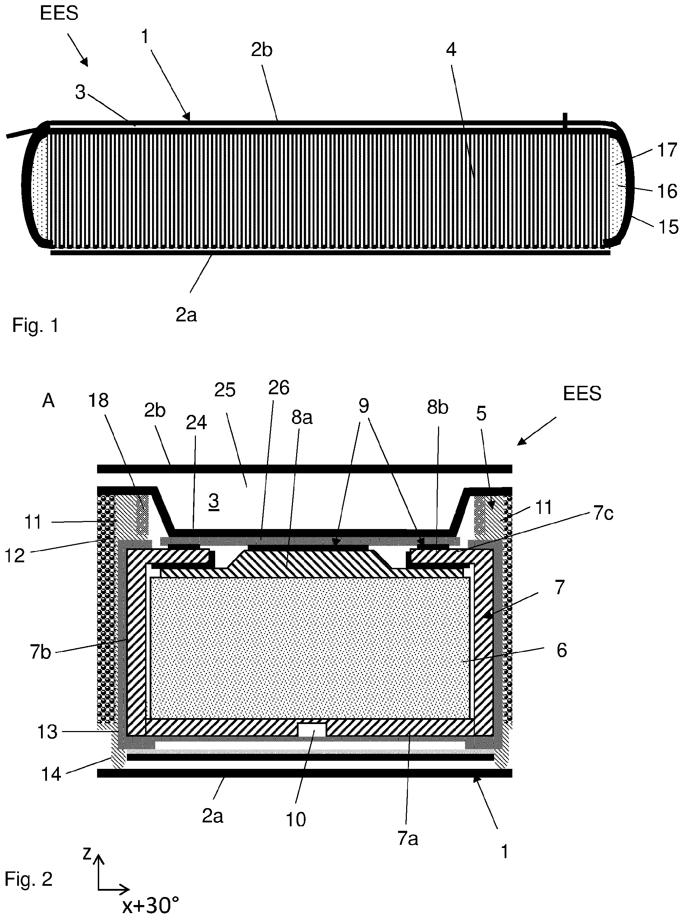

Fig. 1 zeigt einen elektrischen Energiespeicher EES, welcher ein Speichergehäuse 1 mit einem ersten Gehäuseteil 2a in Form von einem Gehäuseunterteil und einem zweiten Gehäuseteil 2b in Form von einem Gehäuseoberteil aufweist. Der elektrische Energiespeicher EES kann beispielsweise als Traktionsbatterie für ein elektrisch antreibbares Kraftfahrzeug verwendet werden und als ein Hochvoltenergiespeicher ausgebildet sein. Das Gehäuseoberteil 2b kann doppelwandig ausgebildet sein und einen Zwischenraum 3 für ein strömendes Kühlfluid enthalten. Der Zwischenraum 3 kann über Anschlüsse mit einem äußeren Kühlkreislauf verbunden werden kann. In dem Speichergehäuse 1 zwischen dem Gehäuseunterteil 2a und dem Gehäuseoberteil 2b ist ein Zellverbund 4 angeordnet.

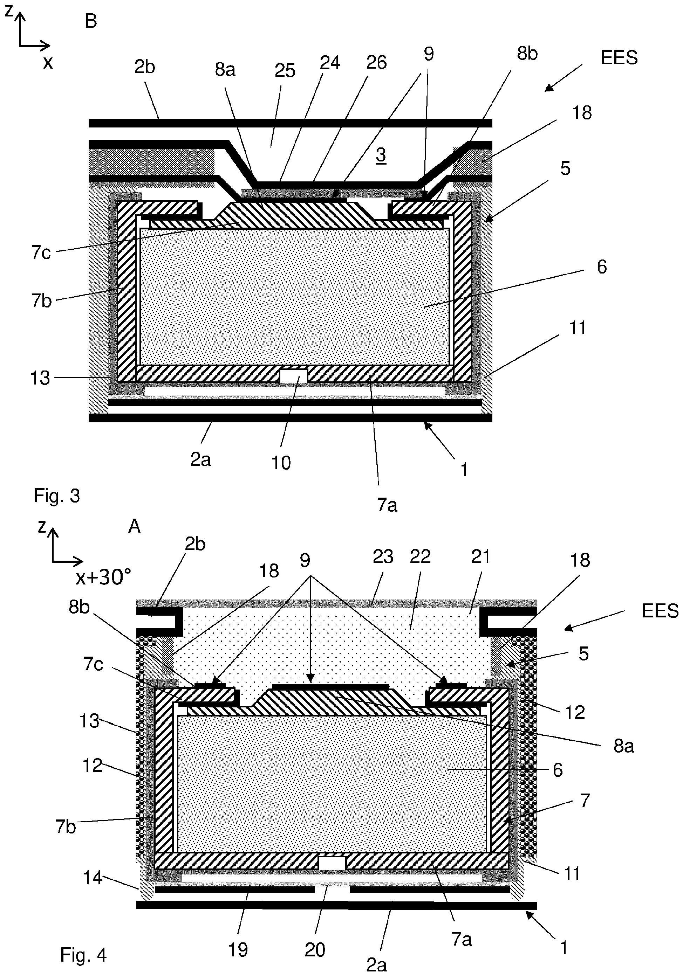

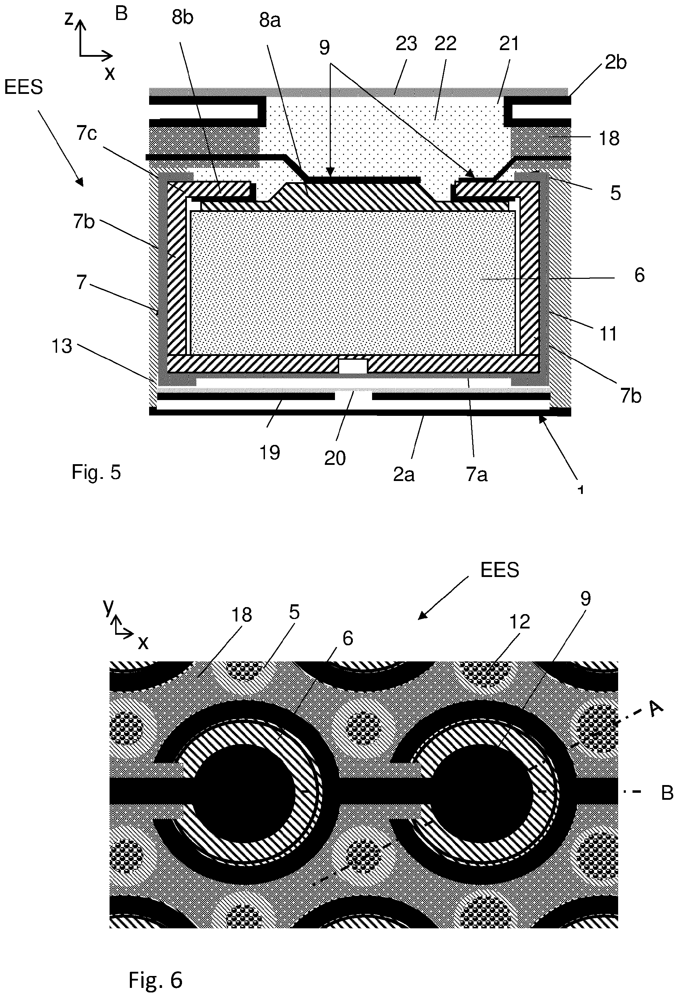

Der Zellverbund 4 weist, wie in den Ausführungsbeispielsweise des elektrischen Energiespeichers EES gemäß Fig. 2 bis Fig. 5 gezeigt, einen Rahmen 5 und Energiespeicherzellen 6 auf. Der elektrische Energiespeicher EES gemäß Fig. 2 bis Fig. 5 ist dabei als eine Schnittdarstellung in einer z-x-Ebene (B) sowie in einem um 30° gegenüber x abweichenden Schnitt (A) dargestellt. Die x-Richtung entspricht beispielsweise einer (Fahrzeug-)Querrichtung und die z-Ebene entspricht beispielsweise einer (Fahrzeug-)Hochrichtung. In Fig. 6 ist eine Schnittdarstellung eines elektrischen Energiespeichers EES in einer x-y-Ebene gezeigt. Die y-Richtung entspricht beispielsweise einer (Fahrzeug-)Längsrichtung. Die Ausführungsformen des elektrischen Energiespeichers EES gemäß Fig. 2 und Fig. 4 entsprechen einem Schnitt entlang der in Fig. 6 gezeigten Schnittlinie A. Die gleichen Ausführungsformen des elektrischen Energiespeichers EES gemäß Fig. 3 und Fig. 5 entsprechen einem Schnitt entlang der in Fig. 6 gezeigten Schnittlinie B.

Die Energiespeicherzellen 6 weisen jeweils ein Zellgehäuse 7 auf, welches einen Zellgehäuseboden 7a, Zellgehäuseseitenwände 7b und einen Zellgehäusedeckel 7c aufweist. Die Energiespeicherzellen 6 können beispielsweise Rundzellen sein, sodass die Zellgehäusedeckel 7c und die Zellgehäuseböden 7a kreisförmig und die Zellgehäuseseitenwände 7b zylinderförmig ausgebildet sind. Die Zellgehäuseseitenwände 7b erstrecken sich dabei in der Hochrichtung z. Die Zellgehäusedeckel 7c können voneinander isolierte Zellterminals 8a, 8b bzw. Zellpole aufweisen, welche zum Verschalten der Energiespeicherzellen 6 mittels eines Zellkontaktiersystems 9 elektrisch verbunden werden können. Die Energiespeicherzellen 6 können außerdem Entgasungsöffnungen 10 zum Auslassen eines Heißgases im Fehlerfall, beispielsweise bei einem zellinternen Kurzschluss, aufweisen. In einer beispielhaften Ausführung ist zur Ausbildung eines Abkühlraumes für Heißgas das Gehäuseunterteil 2a des Speichergehäuses 2 gegenüber den Entgasungsöffnungen 10 beabstandet angeordnet oder als expandierbares Hitzeschild ausgeführt.

Der Rahmen 5 weist Wandungen 11 auf, welche Aufnahmen für die Energiespeicherzellen 6 ausbilden und welche sich entlang der Hochrichtung z zumindest teilweise über eine Höhe der Zellgehäuseseitenwände 7b erstrecken. Die Wandungen 11 können die von den Energiespeicherzellen 6 abgegebene Abwärme aufnehmen und in Richtung des Gehäuseoberteils 2b leiten. Dabei wird der Wärmetransport aus den Energiespeicherzellen 6 in Richtung des Gehäuseoberteils 2b durch Gravitationswärmerohre 12, welche aufgrund der die Gravitationswärmerohre 12 umfassenden Schnittlinie A nur in den Darstellungen gemäß Fig. 2 und Fig. 3 gezeigt sind, unterstützt. Die Gravitationswärmerohre 12 sind dabei monolithisch in den Rahmen 5 integriert oder als separate(s) Bauteil(e) mit dem Rahmen 5 gefügt. Die Gravitationswärmerohre 12 erstrecken sich ebenfalls in Hochrichtung z entlang der Zellgehäuseseitenwände 7b und sind zwischen den Energiespeicherzellen 6 angeordnet. Der Rahmen 5 ist mit dem Gehäuseoberteil 2b wärmeleitend verbunden, z.B. durch Kleben, Schrauben, Nieten, Clinchen, Löten, Schweißen. Die Gravitationswärmerohre 12 weisen ein Arbeitsmedium, beispielsweise eine Flüssigkeit, auf, welches durch die Abwärme der Energiespeicherzellen 6 verdampft und dabei die Abwärme in Hochrichtung z entgegen der Gravitation nach oben transportiert. Die Gravitationswärmerohre 12 sind thermisch mit dem Gehäuseoberteil 2b gekoppelt, welches eine Wärmesenke bzw. einen Kondenser ausbildet. Die Gravitationswärmerohre 12 können dabei nach oben hin offen sein und unmittelbar an das Gehäuseoberteil 2b angeschlossen sein. Nach unten hin sind die Gravitationswärmerohre 12 durch die Wandungen 11 des Rahmens 5 verschlossen. An dem Gehäuseoberteil 2b kondensiert das verdampfte Arbeitsmedium unter Abgabe der Abwärme an das Gehäuseoberteil 2b wieder und fällt entgegen der Hochrichtung z durch die Gravitation wieder nach unten, wo es zum erneuten Aufnehmen von Abwärme wieder verdampfen kann.

Der Arbeitsbereich der Gravitationswärmerohre 12 ist durch die Art der Füllung, einen Befülldruck, eine Variation von Form und Dimension über deren Länge an den zulässigen Temperaturbereich der Energiespeicherzellen 6 sowie die Steuerung des Wärmestroms angepasst. In einer besonders vorteilhaften Abstimmung der Gravitationswärmerohre 12 tragen diese im vorgesehenen Betriebsbereich des elektrischen Energiespeichers EES signifikant zum Wärmetransport bei und trocknen bei Wärmeüberlast aus, um eine Umgebung einer entgasenden Energiespeicherzelle 6 von der Wärmelast der entgasenden Energiespeicherzelle 6 abzuschirmen.

Die Energiespeicherzellen 6 sind von dem Gehäuseunterteil 2a, dem Gehäuseoberteil 2b, und dem Rahmen 5 elektrisch isoliert. In einer beispielhaften Ausführung weisen die Energiespeicherzellen 6 eine elektrische Isolation 13 gegenüber dem Rahmen 5 auf, z.B. in Form von einem aufgeschrumpften Kunststoffschlauch. Die Energiespeicherzellen 6 sind jeweils zumindest im Bereich des Zellkontaktiersystems 9 dichtend in den Rahmen 5 eingesetzt und beispielsweise durch Rastelemente 14 des Rahmens 5 fixiert. Kontaktflächen des Zellkontaktiersystems 9 sind metallurgisch oder durch Druck mit den zugeordneten Zellterminals 8a, 8b der Energiespeicherzellen 6 verbunden. Gemäß Fig. 2 und Fig. 3 weist das Gehäuseoberteil 2b an einer dem Zellverbund 4 zugewandten Innenseite 24 dazu zumindest eine ambossartige Auswölbung 25 auf, welche die Kontaktflächen des Zellkontaktiersystems 9 an die Zellterminals 8a, 8b anpresst. Das Gehäuseoberteil 2b ist also in den Kraftschluss des Druckkontaktsystems des Zellkontaktiersystems 9 eingebunden. Zwischen der Innenseite 24 des Gehäuseoberteils 2b und den Zellterminals 8a, 8b ist zumindest im Bereich der Auswölbung 25 eine Isolationsschicht 26 angeordnet. Diese Ausführungsform ermöglicht eine zusätzliche kontaktierungsseitige Kühlung der Energiespeicherzellen 6.

In einer vorteilhaften Ausführung weist der Rahmen 5, wie in Fig. 1 gezeigt, eine seitliche Begrenzung 15 des elektrischen Energiespeichers EES und einen Raum 16 für eine bei äußeren Kräften hydraulisch ausgleichende Verfüllung 17 auf. Außerdem umfasst der Rahmen 5 Elemente zur mechanischen Integration in ein Kraftfahrzeug und kann als lasttragendes Strukturbauteil einer Karosserie des Kraftfahrzeugs, beispielsweise als Bodengruppe, genutzt werden. Eigenschaften wie Fertigbarkeit, Montierbarkeit, Wärmeleitung, Kraftaufnahmefähigkeit und Gewicht können durch eine Materialwahl, Ausnehmungen, eine Anpassung von Wandstärken und Rippenstrukturen optimiert sein.

Beispielsweise ist der Rahmen 5 in einem Gussverfahren oder als 3D-Print aus Aluminium oder Magnesium ausgebildet. Ein mittels Magnesium gefertigter Rahmen 5 ist besonders gut gießbar, weist besonders günstige Entformschrägen auf und ist besonders gewichtssparend ausgebildet. Das Zellkontaktiersystem 9 ist beispielsweise als Leadframe bzw. Stanzkamm ausgebildet. Der Rahmen 5 und das Zellkontaktiersystem 9 sind durch ein Fügeverfahren, beispielsweise durch Vergießen, miteinander verbunden. Dabei kann der Rahmen 5 auch innerhalb eines Gussfertigungsschrittes für einen elektrisch isolierenden Träger 18 des Zellkontaktiersystems 9 in ein monolithisches Bauteil integriert bzw. das monolithische Bauteil als 3D-Druck dargestellt werden.

Zum Schutz der Energiespeicherzellen 6 gegen Heißgas kann, wie in Fig. 2 bis Fig. 5 gezeigt, zellgehäusebodenseitig eine zusätzliche und gegebenenfalls zusätzlich abdichtende Zellabdeckung 19 an den Rahmen 5 angebracht werden, welche sich bei Überdruck aus dem Rahmen 5 löst und den Weg für das Heißgas freigibt oder/und ein Berstelement 20 für den Durchtritt des Heißgases enthält. Im Servicefall kann bei der in Fig. 2 und Fig.3 gezeigten Anordnung auf einen unmittelbaren Zugang zu dem Zellkontaktiersystem 9 verzichtet werden und der Service ausschließlich durch eine Abnahme des Gehäuseunterteils 2a sowie eine Entnahme der Zellabdeckung 19 und der Energiespeicherzelle 6 erfolgen. Besonders vorteilhaft ist dabei, dass der Service mit hoher Spezifität und unmittelbarer Zugänglichkeit von dem Unterboden des Kraftfahrzeuges aus durchgeführt werden kann. Alternativ zur Zellabdeckung 19 oder zusätzlich können die Zellgehäuseböden 7a auch mit einem Brandschutzlack beschichtet sein.

In einer Ausführungsform des elektrischen Energiespeichers gemäß Fig. 4 und Fig. 5 kann das Gehäuseoberteil 2b Bereich der Energiespeicherzellen 6 mittels Aussparungen 21 unterbrochen sein, um eine metallurgische Kontaktierung der Energiespeicherzellen 6 sowie die Einbringung eines Vergusses 22 zu gewährleisten. Die Aussparungen 21 werden abschließend mit einer Kontaktabdeckung 23 versehen. Im Servicefall kann die Kontaktabdeckung 23 zumindest lokal entfernt und abschließend durch ein Patch verschlossen werden.

## Patentansprüche

1. Kühleinrichtung für einen elektrischen Energiespeicher (EES) zum Kühlen von Energiespeicherzellen (6) des elektrischen Energiespeichers (EES), wobei die Kühleinrichtung Gravitationswärmerohre (12) mit einem Arbeitsmedium zum Aufnehmen von Abwärme der Energiespeicherzellen (6) aufweist,
**dadurch gekennzeichnet, dass**
die Kühleinrichtung einen Rahmen (5) mit Wandungen (11) zum Ausbilden von Aufnahmen für die Energiespeicherzellen (6) aufweist, wobei die Gravitationswärmerohre (12) in die Wandungen (11) integriert sind und die Wandungen (12) hierfür in einer Hochrichtung entlang der Gravitationsrichtung rohrförmige Hohlräume aufweisen, welche zum Ausbilden der Gravitationswärmerohre (12) mit dem Arbeitsmedium gefüllt sind.

2. Kühleinrichtung nach Anspruch 1,
**dadurch gekennzeichnet, dass**
der Rahmen (5) zusätzlich zum Aufnehmen von unfallbedingten Kräften ausgebildet ist.

3. Kühleinrichtung nach einem der vorhergehenden Ansprüche,
**dadurch gekennzeichnet, dass**
die Kühleinrichtung eine Wärmesenke aufweist, an welcher das die Abwärme transportierende verdampfte Arbeitsmedium zum Abgeben der Abwärme kondensiert.

4. Kühleinrichtung nach Anspruch 3,
**dadurch gekennzeichnet, dass**
die Wärmesenke durch ein Gehäuseteil (2b) eines Speichergehäuses (1) des elektrischen Energiespeichers (EES) ausgebildet ist.

5. Kühleinrichtung nach einem der vorhergehenden Ansprüche,
**dadurch gekennzeichnet, dass**
der Rahmen (5) durch Druckguss, insbesondere aus Aluminium oder Magnesium, gefertigt ist.

6. Elektrischer Energiespeicher (EES) mit zumindest einem Zellverbund (4) aufweisend Energiespeicherzellen (6) und eine Kühleinrichtung nach einem der vorhergehenden Ansprüche, wobei die Energiespeicherzellen (6) in den Aufnahmen des Rahmens (5) angeordnet sind, und mit einem Speichergehäuse (1), in welchem der zumindest eine Zellverbund (4) angeordnet ist.

7. Elektrischer Energiespeicher (EES) nach Anspruch 6,
**dadurch gekennzeichnet, dass**
der elektrische Energiespeicher (EES) einen Träger (18) und ein Zellkontaktiersystem (9) zum Verschalten der Energiespeicherzellen (6) aufweist, wobei das Zellkontaktiersystem (9) und der Rahmen (5) in den Träger (18) integriert sind.

8. Kraftfahrzeug mit zumindest einem elektrischen Energiespeicher (EES) nach Anspruch 6 oder 7.

9. Kraftfahrzeug nach Anspruch 8,
**dadurch gekennzeichnet, dass**
der Rahmen (5) unter Ausbildung einer Tragstruktur mit einer Karosserie des Kraftfahrzeugs verbunden ist.

## Claims

1. Cooling device for an electrical energy store (EES) for cooling energy storage cells (6) of the electrical energy store (EES), wherein the cooling device comprises gravity heat pipes (12) with a working medium for taking up waste heat from the energy storage cells (6),
**characterized in that**
the cooling device has a frame (5) with walls (11) for forming receptacles for the energy storage cells (6), wherein the gravity heat pipes (12) are integrated in the walls (11) and the walls (12) for this have cavities which are vertically tubular along the direction of gravity and are filled with the working medium to form the gravity heat pipes (12).

2. Cooling device according to Claim 1,
**characterized in that**
the frame (5) is additionally designed to take up forces caused by an accident.

3. Cooling device according to either of the preceding claims,
**characterized in that**
the cooling device has a heat sink, on which the evaporated working medium transporting the exhaust heat condenses to discharge the exhaust heat.

4. Cooling device according to Claim 3,
**characterized in that**
the heat sink is formed by a housing part (2b) of a store housing (1) of the electrical energy store (EES).

5. Cooling device according to one of the preceding claims,
**characterized in that**
the frame (5) is manufactured, in particular from aluminium or magnesium, by die casting.

6. Electrical energy store (EES) having at least one cell assembly (4) having energy storage cells (6) and a cooling device according to one of the preceding claims, wherein the energy storage cells (6) are disposed in the receptacles in the frame (5), and having a store housing (1), in which the at least one cell assembly (4) is disposed.

7. Electrical energy store (EES) according to Claim 6,
**characterized in that**
the electrical energy store (EES) comprises a support (18) and a cell contact-connection system (9) for interconnecting the energy storage cells (6), wherein the cell contact-connection system (9) and the frame (5) are integrated in the support (18).

8. Motor vehicle having at least one electrical energy store (EES) according to Claim 6 or 7.

9. Motor vehicle according to Claim 8,
**characterized in that**
the frame (5) is connected to a bodywork of the motor vehicle with formation of a support structure.

## Revendications

1. Dispositif de refroidissement pour un accumulateur d'énergie électrique (EES) pour refroidir des cellules d'accumulateur d'énergie (6) de l'accumulateur d'énergie électrique (EES), le dispositif de refroidissement présentant des caloducs assistés par gravité (12) avec un fluide de travail pour absorber la chaleur dissipée des cellules d'accumulateur d'énergie (6),
**caractérisé en ce que**
le dispositif de refroidissement présente un cadre (5) avec des parois (11) pour réaliser des logements pour les cellules d'accumulateur d'énergie (6), les caloducs assistés par gravité (12) étant intégrés dans les parois (11) et les parois (12) présentant à cet effet des espaces creux tubulaires dans une direction verticale le long de la direction de la gravité, lesquels sont remplis du fluide de travail pour réaliser les caloducs assistés par gravité (12).

2. Dispositif de refroidissement selon la revendication 1,
**caractérisé en ce que**
le cadre (5) est en outre réalisé pour absorber les forces accidentelles.

3. Dispositif de refroidissement selon l'une quelconque des revendications précédentes,
**caractérisé en ce que**
le dispositif de refroidissement présente un puits de chaleur sur lequel le fluide de travail évaporé transportant la chaleur dissipée se condense pour libérer la chaleur dissipée.

4. Dispositif de refroidissement selon la revendication 3,
**caractérisé en ce que**
le puits de chaleur est réalisé par une partie de boîtier (2b) d'un boîtier d'accumulateur (1) de l'accumulateur d'énergie électrique (EES).

5. Dispositif de refroidissement selon l'une quelconque des revendications précédentes,
**caractérisé en ce que**
le cadre (5) est fabriqué par moulage sous pression, notamment en aluminium ou en magnésium.

6. Accumulateur d'énergie électrique (EES) avec au moins un ensemble de cellules (4) présentant des cellules d'accumulateur d'énergie (6) et un dispositif de refroidissement selon l'une quelconque des revendications précédentes, les cellules d'accumulateur d'énergie (6) étant agencées dans les logements du cadre (5), et avec un boîtier d'accumulateur (1) dans lequel est agencé l'au moins un ensemble de cellules (4).

7. Accumulateur d'énergie électrique (EES) selon la revendication 6,
**caractérisé en ce que**
l'accumulateur d'énergie électrique (EES) présente un support (18) et un système de contact de cellules (9) pour interconnecter les cellules d'accumulateur d'énergie (6), le système de contact de cellules (9) et le cadre (5) étant intégrés dans le support (18).

8. Véhicule automobile avec au moins un accumulateur d'énergie électrique (EES) selon la revendication 6 ou 7 .

9. Véhicule automobile selon la revendication 8,
**caractérisé en ce que**
le cadre (5) est relié à une carrosserie du véhicule automobile en réalisant une structure porteuse.
